# EUROPEAN PATENT APPLICATION

(11) **EP 0 607 099 A2**
(43) Date of publication of application: **20.07.1994**
(21) Application number: 94500002.4
(22) Date of filing: 10.01.1994
(51) Int. Cl.: G01K 7/02, G01K 7/04

(54) **Improved thermocouple for gas burners**

(30) Priority: 12.01.1993 ES 9300044
(71) Applicant: ORKLI S. COOP. LTDA., E-20240 Villafranca de Ordicia (Guipuzcoa) (ES)
(72) Inventor: Guirado, Tristan, José Antonio, ES-20240 Villafranca de Ordicia(Guipuzc) (ES)
(74) Representative: Carpintero Lopez, Francisco

(57) **Abstract**

Such is provided as any conventional thermocouple with a hot weld (5) and a cold weld (6) between which an electromotive force is generated applicable through coaxial conductors (2) and (3) to a magnetic unit controlling the passage of gas towards the burner, and its characteristics lie in the provision of a second hot weld (7), being especially particular in that this secondary weld (7) generates an electromotive force the value of which is smaller than and in opposition to that of the primary weld (5), so that these opposite electromotive forces generate a resultant that does not affect the speed of access to standard operation of the thermocouple and yet substantially cuts down on the time within which the magnetic unit for the passage of gas is turned or switched off.

## Description

### SPECIFICATION

### OBJECT OF THE INVENTION

The present invention relates to a thermocouple, of the kind used in gas burners to control the outflow of such gas, which thermocouple has been largely improved in order to substantially cut down on its response time, above all when the flame is extinguished.

### BACKGROUND OF THE INVENTION

Safety regulations applicable to gas burners provide that for a chance extinguishment of the flame the supply of gas towards the burners shall be automatically cut out in order to prevent gas from accumulating and in turn leading to explosions or minor or major accidents.

In order to achieve this effect, a wholly widespread solution is the use of an electromagnetic unit that permanently tends towards the closed position, and opens manually when the gas burner is lit, being fitted with a bulb or sensor constituting the thermocouple as such, where an electromotive force is generated due to the heat, this force being large enough to hold the electromagnetic unit open, which open position is held until the said electromotive force is not discontinued, this discontinuance being in turn caused by the extinguishment of the flame.

In order to achieve this effect current thermocouples have a hot weld and a cold weld, the first to be found close to the flame and the latter at quite some distance from the same, so that the heat between these two welds generates the aforesaid electromotive force that is required for the electromagnetic unit to be kept open.

These thermocouples, albeit satisfactory in operation, have an essential drawback in their very slow response, to the extent that after the flame is put out the electromagnetic unit is not turned off and hence the outflow of gas is not stopped until after thirty seconds, during which time a very significant amount of unburnt gas may have left the burner.

### DESCRIPTION OF THE INVENTION

The thermocouple for gas burners subject of the invention has been improved in order to fully overcome the above drawback, dramatically reducing the response times of conventional thermocouples.

More specifically and in order to achieve the above, the thermocouple subject hereof has a construction like that of a conventional thermocouple, and its characteristics lie in the provision of an additional weld, to be found between the classic hot and cold welds, at quite some distance from the first weld and especially particular in that the said additional weld generates an electromotive force that is rather smaller than and in opposition to that of the conventional hot weld.

In accordance with this structure and given that the heating of the secondary weld begins later than the heating of the primary weld, for the secondary weld is found at a greater distance from the heat source, the thermocouple begins to work similarly to a conventional thermocouple, and the resultant voltage drops when the thermocouple is already working, so that the secondary weld does not affect the lighting speed, and in such working position, and since the opposition electric couple due to the secondary weld is smaller than the primary couple, the resultant is lower but sufficient to keep the system working. When the flame is put out the voltage drop in the primary or main weld takes place much faster than in the secondary weld, and hence the resultant electromotive force drops far quicker than the value of the voltage pertaining exclusively to the primary weld, and hence the electromagnetic unit is turned off, i.e. the passage of gas is discontinued much quicker.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a side elevation and diametric sectional view of a thermocouple for gas burners in accordance with the improvements subject of the invention.

Figure 2.- Is a diagram of electromotive force againsst time in relation to the primary and secondary welds and their resultant.

### PREFERRED EMBODIMENT OF THE INVENTION

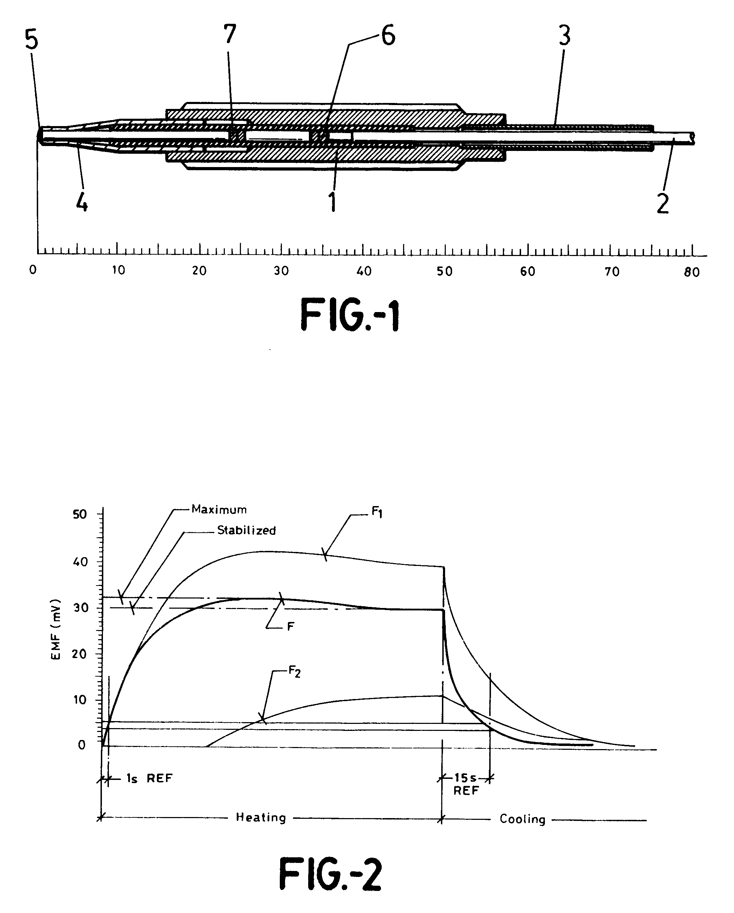

In the light of these figures and in particular figure 1 it is clear that the structure of the thermocouple subject hereof, as in any thermocouple of this kind, has a supporting body (1) that is by nature electrically insulating, within which there is coaxially provided an inner conductor (2) and an outer conductor (3) through which the current generated in the thermocouple is transmitted to the magnetic unit controlling the passage of gas, the body (1) ending in a front bulb or sensor (4) in which there is provided a primary weld or hot weld (5), whereas within the body (1) and at some distance from the hot weld (5) there is provided a cold weld (6) in order that between these two welds (5) and (6) a certain electromotive force is generated transmitted through the conductors (2) and (3).

Now then, from this basic conventional structure and as figure 1 also shows, the improvements of the invention comprise establishing within the insulating body (1), between the hot weld (5) and the cold weld (6) a second hot weld (7) or secondary weld, the said secondary weld (7) being particular in generating an electromotive force in opposition to that generated by the primary weld (5).

The diagram of figure 2 shows the curves of electromotive forces of both welds, and the resultant thereof, during both the heating and the cooling stages, the electromotive force generated by the primary weld (5) being in particular marked "F₁", the electromotive force generated by the secondary weld (7) being marked "F₂" and the resultant electromotive force being marked "F".

The said figure 2 full clearly shows that as aforesaid during the heating stage and since the secondary weld (7) is at quite some distance from the heat source, the generation of the electromotive force "F₂" therein begins substantially later than "F₁", and hence switching on of the thermocouple is not adversely affected by this counter-electromotive force "F₂", for the resultant "F" is almost exactly the same as the electromotive force "F₁" of the primary weld (5) at such initial stage. And yet when the flame is extinguished, the value drop of the electromotive force "F₁" of the primary weld (5) is sharply enhanced by the electromotive force "F₂" generated by the secondary weld (7), the value of which falls much slower, the resultant "F" hence having a considerably sharper incline, which is also very clear in the light of figure 2, thereby driving the electromagnetic unit much before in time, viz. the same is turned off much quicker in the event of the flame going out.

## Claims

**1.-** An improved thermocouple for gas burners, being of the kind having a hot weld (5) found at the heat source of the burner, and a cold weld (6) that is at quite some distance from the hot weld (5), both welds therefore generating an electromotive force transmitted through coaxial cables (2-3) to an electromagnetic unit controlling the passage of gas towards the burners and permanently tending to be switched off, characterised in that between the said hot (5) and cold (6) welds there is provided a secondary weld (7) that is also hot as the primary weld (5), but being especially particular in that this secondary weld (7) generates an electromotive force in opposition to that of the primary weld (5) and having a substantially smaller value, all so that the secondary weld (7) shall not affect the thermocouple at the initial heating stage, since it is actually heated later in time as compared with the primary weld (5), neither shall it affect the standard operating procedure of the thermocouple, inasmuch as with the primary weld it yields a resultant having a value that suffices for the electromagnetic unit to be kept on, and yet causes at the cooling stage a resultant having a sharp incline or drop, that brings about a very fast turning or switching off of the magnetic unit.
